# EUROPEAN PATENT APPLICATION

(11) **EP 4 683 051 A1**
(43) Date of publication of application: **21.01.2026**
(21) Application number: 25164621.2
(22) Date of filing: 19.03.2025
(51) Int. Cl.: H01M 50/103, H01M 50/553, H01M 50/593, H01M 10/04, H01M 10/0587, H01M 50/586

(54) **SECONDARY BATTERY INCLUDING ELECTRODE ASSEMBLY LATERALLY INSERTED IN CASE AND METHOD OF MANUFACTURING SAME**

(30) Priority: 18.07.2024 KR 20240095249
(71) Applicant: SAMSUNG SDI CO., LTD., Yongin-si, Gyeonggi-do 17084 (KR)
(72) Inventor: Lee, Juhyung, 17084 Yongin-si, Gyeonggi-do (KR)
(74) Representative: Gulde & Partner

(57) **Abstract**

A secondary battery includes: a case having an open lateral surface; an electrode assembly inserted into the case through the open lateral side, the electrode assembly comprising a bent electrode tab; a terminal electrically connected to the bent electrode tab of the electrode assembly, the terminal being exposed to the outside of the case; a cover sealing the open lateral side of the case; and an electrode plate insulating member electrically insulating the electrode assembly from the terminal.

## Description

### BACKGROUND

### 1. Field

Aspects of embodiments of the present disclosure relate to a secondary battery including a laterally-inserted electrode assembly and a method of manufacturing the same.

### 2. Description of Related Art

Different from primary batteries that are not designed to be charged, secondary batteries are batteries that are designed to be (re)charged and discharged. Low-capacity secondary batteries are used in portable small electronic devices, such as smartphones, feature phones, laptop computers, digital cameras, and camcorders, whereas large-capacity secondary batteries are widely used as power sources for driving motors in hybrid vehicles, electric vehicles, and the like as well as for power storage batteries. A secondary battery generally includes an electrode assembly formed of a positive electrode and a negative electrode, a case for accommodating the electrode assembly, and electrode terminals connected to the electrode assembly.

Secondary batteries generally include (or may be classified as) cylindrical, pouch, and prismatic batteries. In the case of a pouch-type secondary battery from among these types of secondary batteries, an electrode assembly (e.g., a jelly-roll electrode assembly) is assembled by being inserted laterally into a pouch. In the case of a prismatic-type battery, an electrode assembly is assembled by being inserted vertically into a case or by being inserted laterally into an opening in a lateral surface of the case.

In the case of the prismatic battery in which the electrode assembly is assembled by being laterally inserted into the opening in the lateral surface of the case, if a size of the electrode assembly is increased to increase battery capacity (e.g., energy storage capacity), it is difficult to insert the electrode assembly into the case and assemble it due to a reduction in empty space in the case.

The above information disclosed in this Background section is for enhancement of understanding of the background of the present disclosure, and therefore, it may contain information that does not constitute a related (or prior) art.

### SUMMARY

The invention is defined by the appended claims. The description that follows is subjected to this limitation. Any disclosure lying outside the scope of said claims is only intended for illustrative as well as comparative purposes.

Embodiments of the present disclosure provide a secondary battery having a configuration that allows for easy assembly of an electrode assembly with a maximized size in a limited space by improving a method of manufacturing a secondary battery in which an electrode assembly is laterally inserted into an opening in a lateral surface of a case and is assembled thereto, and a manufacturing method thereof.

According to an embodiment of the present disclosure, a secondary battery includes a case having an open lateral surface, an electrode assembly inserted into the case through the open lateral surface and includes an electrode plate having a bent electrode tab, a terminal exposed to the outside of the case and electrically connected to the bent electrode tab of the electrode assembly, a cover sealing the open lateral surface of the case, and an electrode plate insulating member electrically insulating the electrode plate of the electrode assembly from the terminal.

According to another embodiment of the present disclosure, a method of manufacturing a secondary battery includes manufacturing a case having an open lateral surface and a cover for sealing the open lateral surface, manufacturing an electrode assembly including an electrode tab, manufacturing a terminal to be coupled to the case and coupling the terminal to the case, connecting the electrode tab of the electrode assembly to the terminal coupled to the case, bending the electrode tab of the electrode assembly, inserting the electrode assembly having the bent electrode tab is bent into the case through the open lateral surface of the case, applying an electrode plate insulating member to electrically insulate the electrode plate of the electrode assembly from the terminal, and sealing the open lateral side of the case with the cover.

According to another embodiment of the present disclosure, a secondary battery includes a case having an open lateral surface, electrode assembly inserted into the case and including an electrode plate and a bent electrode tab connected to the electrode plate, a first terminal exposed to the outside of the case and electrically connected to the bent electrode tab of the electrode assembly, a second terminal not exposed to the outside of the case, and an electrode plate insulating member including a first insulating portion electrically insulating the second terminal from the electrode plate of the electrode plate of the electrode assembly and a second insulating portion electrically insulating the first terminal from the electrode plate of the electrode assembly.

Aspects and features of the present disclosure are not limited to those described above, and other aspects and features not specifically mentioned herein will be clearly understood by those skilled in the art from the description of the present disclosure below.

### BRIEF DESCRIPTION OF THE DRAWINGS

The following drawings attached to the present specification illustrate embodiments of the present disclosure and further describe aspects and features of the present disclosure together with the detailed description of the present disclosure below. Thus, the present disclosure should not be construed as being limited to the drawings, in which:
FIG. 1 a schematic diagram of an electrode assembly of a secondary battery;
FIG. 2A is a top perspective view of an exterior of a secondary battery according to some embodiments of the present disclosure;
FIG. 2B is an exploded perspective view of the secondary battery shown in FIG. 2A;
FIG. 3 is a cross-sectional view taken along the line I-I' in FIG. 2A;
FIG. 4 is a cross-sectional view taken along the line II-II' in FIG. 2A;
FIG. 5 is a diagram illustrating an interior of a case and a terminal portion of a secondary battery according to some embodiments of the present disclosure;
FIGS. 6A to 6C are diagrams illustrating steps of an assembling process of a case-electrode assembly according to some embodiments of the present disclosure;
FIGS. 7A to 7C are diagrams illustrating an electrode plate insulating member;
FIGS. 8A to 8D are diagrams illustrating steps of an assembling process of a case-electrode assembly according to other embodiments of the present disclosure;
FIGS. 9A to 9D are diagrams illustrating steps of an assembling process of a case-electrode assembly according to other embodiments of the present disclosure;
FIG. 10 is a diagram illustrating a secondary battery module in which secondary batteries according to some embodiments of the present disclosure are arranged;
FIG. 11 is a diagram of a secondary battery pack including the secondary battery module shown in FIG. 10; and
FIG. 12 is a conceptual diagram illustrating a vehicle including the secondary battery pack shown in FIG. 11.

### DETAILED DESCRIPTION

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

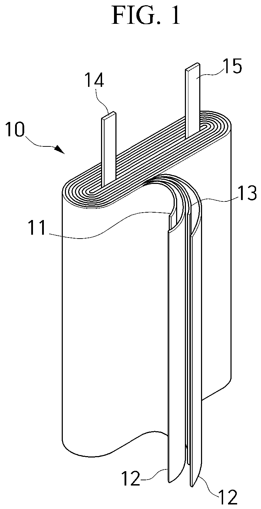

FIG. 1 shows an electrode assembly of a secondary battery.

Referring to FIG. 1, an electrode assembly 10 may be formed by winding or stacking a stack of a first electrode plate 11, a separator 12, and a second electrode plate 13, each of which are formed as thin plates or films. When the electrode assembly 10 is a wound stack, a winding axis may be parallel to the longitudinal direction of a case. In other embodiments, the electrode assembly 10 may be a stack type rather than a winding type, and the shape of the electrode assembly 10 is not limited in the present disclosure. In addition, the electrode assembly 10 may be a Z-stack electrode assembly in which a positive electrode plate and a negative electrode plate are inserted into both sides (e.g., opposite sides) of a separator, which is then bent (or folded) into a Z-stack. In addition, one or more electrode assemblies may be stacked (e.g., arranged) such that long sides of the electrode assemblies are adjacent to each other and accommodated in a case, and the number of electrode assemblies in a case is not limited in the present disclosure. The first electrode plate 11 of the electrode assembly may act as a negative electrode, and the second electrode plate 13 may act as a positive electrode. Of course, the reverse is also possible.

The first electrode plate 11 may be formed by applying (e.g., coating or depositing) a first electrode active material, such as graphite or carbon, onto a first electrode substrate formed of a metal foil, such as copper, a copper alloy, nickel, or a nickel alloy. The first electrode plate 11 may include a first electrode tab 14 (e.g., a first uncoated portion), which is a region to which the first electrode active material is not applied. The first electrode tab 14 may be connected to an external first terminal. In some embodiments, when the first electrode plate 11 is manufactured, the first electrode tab 14 may be formed by being cut in advance to protrude to (or protrude from) one side of the electrode assembly 10, or the first electrode tab 14 may protrude to one side of the electrode assembly 10 more than (e.g., farther than or beyond) the separator 12 without being separately cut.

The second electrode plate 13 may be formed by applying (e.g., coating or depositing) a second electrode active material, such as a transition metal oxide, onto a second electrode substrate formed of a metal foil, such as aluminum or an aluminum alloy. The second electrode plate 13 may include a second electrode tab 15 (e.g., a second uncoated portion), which is a region to which the second electrode active material is not applied. The second electrode tab 15 may be connected to an external second terminal. In some embodiments, the second electrode tab 15 may be formed by being cut in advance to protrude to the other side (e.g., the opposite side) of the electrode assembly 10 when the second electrode plate 13 is manufactured, or the second electrode plate 13 may protrude to the other side of the electrode assembly more than (e.g., farther than or beyond) the separator 12 without being separately cut.

The separator 12 prevents a short-circuit between the first electrode plate 11 and the second electrode plate 13 while allowing movement of lithium ions therebetween. The separator 12 may be made of, for example, a polyethylene film, a polypropylene film, a polyethylene-polypropylene film, or the like.

In some embodiments, the electrode assembly 10 may be accommodated in a case along with an electrolyte. In a pouch-type secondary battery, an electrode assembly 10 may be accommodated in a pouch made of flexible material. In a cylindrical or prismatic secondary battery, an electrode assembly 10 may be accommodated in a cylindrical or prismatic metal case.

Hereinafter, suitable materials that may be usable for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05), LiₐMn_{2-b}X_{b}O_{4-c}D_{c} (0.90≤a≤1.8, 0≤b≤0.5, 0≤c≤0.05); LiₐNi_{1-6-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5,0<α<2); LiₐNi_{b}Co_{c}L¹₄GₑO₂ (0.90≤a≤1.8, 0≤b≤0.9, 0≤c≤0.5,0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of 90 wt% to 99.5 wt% on the basis of 100 wt% of the positive electrode active material layer, and the content of the binder and the conductive material is in a range of 0.5 wt% to 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include 90 wt % to 99 wt % of a negative electrode active material, 0.5 wt % to 5 wt % of a binder, and 0 wt % to 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

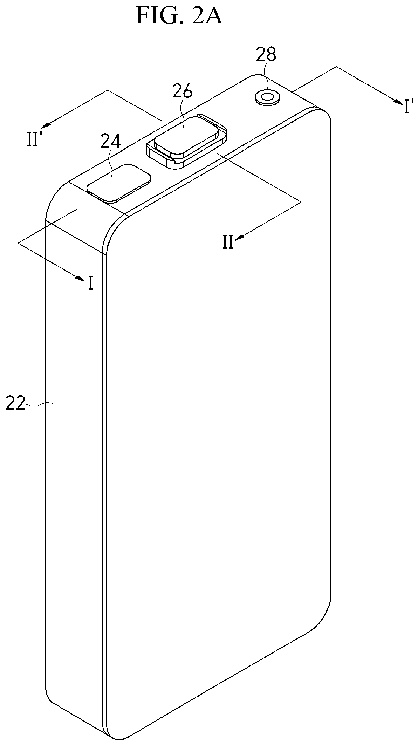

FIG. 2A is a top perspective view of an exterior of a secondary battery according to some embodiments of the present disclosure.

A case 22 may provide (or may form) a space in which the electrode assembly 10, for example, as shown in FIG. 1, is accommodated and may form the entire exterior of the secondary battery. The case 22 may be formed of a conductive metal, such as aluminum, an aluminum alloy, nickel-plated steel, or an SUS (stainless steel) material.

A first terminal 24 and a second terminal 26 may be installed to be electrically connected to the first electrode tab 14 and the second electrode tab 15 of the electrode assembly 10, which is inserted into an inside of the case 22, respectively, and are exposed to the outside of the case 22.

An electrolyte inlet 28 may also be formed in the case 22, and a vent that is configured to opened (e.g., to burst) in response to excess gas generated inside the battery to discharge (e.g., to degas) the gas may also be formed.

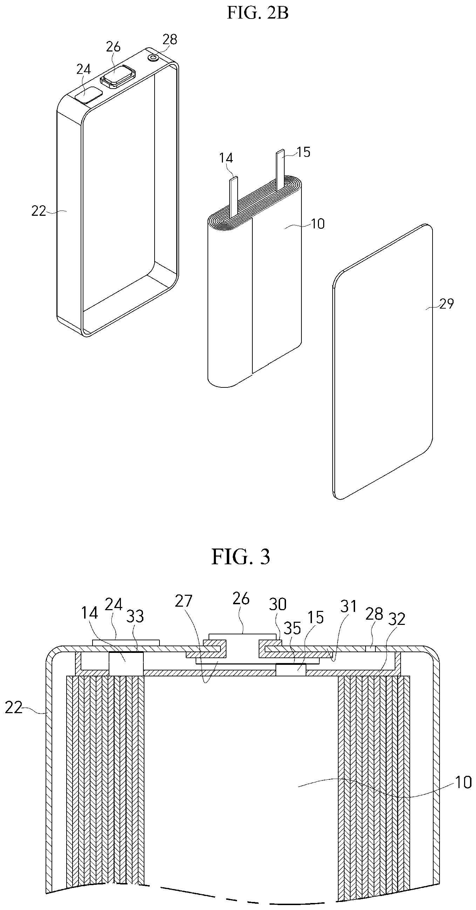

FIG. 2B is an exploded perspective view of the secondary battery shown in FIG. 2A.

The secondary battery according to the present embodiment may have a structure in which a wide lateral surface of the case 22 is open, the electrode assembly 10 is inserted laterally into the opening, and a cover 29 covers (e.g., seals) the opening. The first electrode tab 14 and the second electrode tab 15 of the electrode assembly 10 may be connected to the first terminal 24 and the second terminal 26 of the case 22, which are exposed to the outside, by welding in an interior of the case 22.

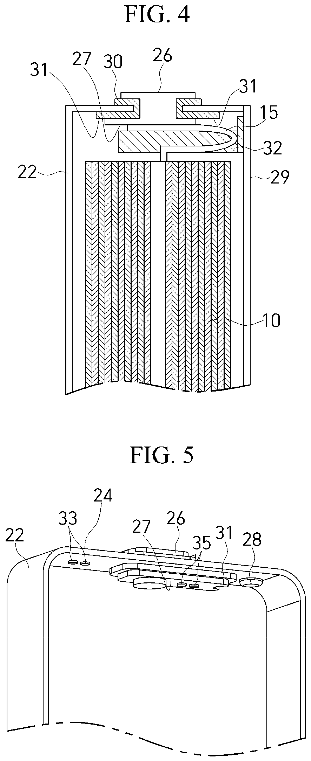

FIGS. 3 and 4 are diagrams for describing a more detailed configuration of the secondary battery shown in FIGS. 2A and 2B. FIG. 3 is a cross-sectional view taken along the line I-I' in FIG. 2A, and FIG. 4 is a cross-sectional view taken along the line II-II' in FIG. 2A.

First, referring to FIG. 3, the first terminal 24 may be bonded to the case 22, and the second terminal 26 may be electrically insulated from the case 22 via an insulator 30 and may extend to the interior of the case 22. Thus, the second terminal 26 may have an inner terminal portion 27 in the interior of the case 22. The insulator 30 may have an inner insulating portion 31 in the interior of the case 22 to provide electrical insulation between the second terminal 26 and the case 22.

The first electrode tab 14 of the electrode assembly 10, which is inserted laterally into the interior of the case 22, may be welded to a welding portion of an inner surface of the case 22 and connected to the first terminal 24 through the case 22, and the second electrode tab 15 of the electrode assembly 10 may be welded to the inner terminal portion 27 of the second terminal 26. Reference number 33 indicates the welding portion at where the first electrode tab 14 is welded to the inner surface of the case 22, and reference number 35 indicates a welding portion at where the second electrode tab 15 is welded to the inner terminal portion 27 of the second terminal 26. The first electrode tab 14 and the second electrode tab 15 may be bent as shown in FIG. 4. FIG. 4 shows the welding of the second electrode tab 15 of the electrode assembly 10 to the inner terminal portion 27 of the second terminal 26 and subsequent bending thereof (e.g., FIG. 4 shows a cross-sectional view cut in an axial direction of the second terminal 26 and, thus, does not show the bending structure of the first electrode tab 14).

Due to the above assembly structure, an electrode plate insulating member 32 may be included to provide electrical insulation between an inner side of the first terminal 24 and an electrode plate edge surface of the electrode assembly 10 and between the inner terminal portion 27 of the second terminal 26 and the electrode plate edge surface of the electrode assembly 10. In addition, because an inner surface of the cover 29, which covers the lateral surface after the assembly, may come into contact with the bending portions of the first electrode tab 14 and the second electrode tab 15, the electrode plate insulating member 32 may also electrically insulate the bending portions.

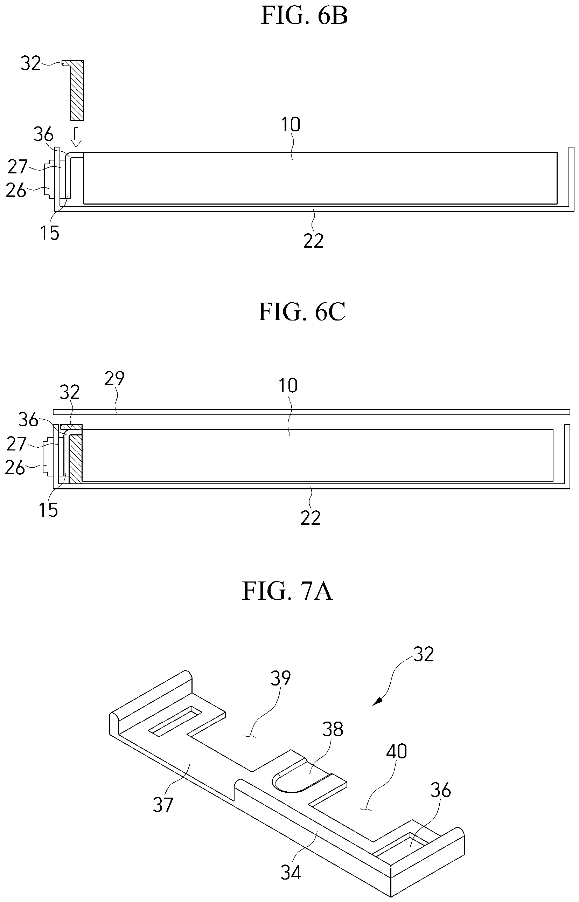

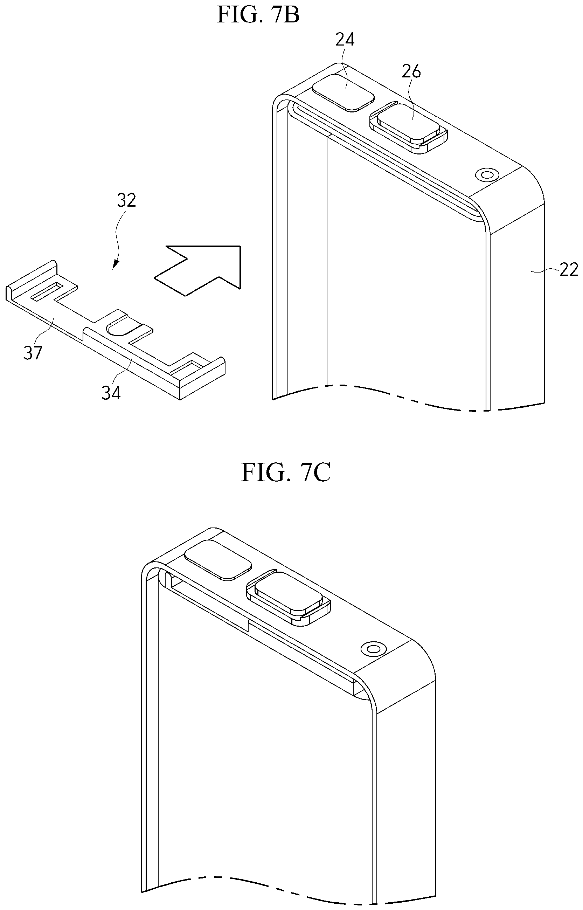

The electrode plate insulating member 32 will be described in detail below in connection with the description of the manufacturing method, and a shape thereof is shown in FIGS. 7A and 7B.

Conventionally, the electrode assembly 10 is inserted laterally into the case 22, the insulating member is applied, and the case, the terminals, and the electrode tabs are connected by welding. In this case, the electrode tab is formed to be relatively long to ensure easiness of work. However, to increase battery capacity, a size of the electrode assembly 10 (especially an area of an electrode plate) inserted into the case 22 may be increased, and thus, the electrode tabs 14 and 15 may be formed to be relatively short and a space between the inner surface of the case 22 and the electrode assembly 10 may be narrowed. In the structure providing such an increase in battery capacity, it is difficult to bend and weld the short electrode tabs 14 and 15 in the narrow space available after inserting the electrode assembly into the case 22 as in the conventional assembly method.

Therefore, according to embodiments of the present disclosure, an assembly method allows for increasing the battery capacity by forming the electrode tabs 14 and 15 as short as possible to expand an effective area of the electrode assembly 10, and a method of applying the insulating member is improved. The concept of the method of assembling an electrode assembly according to embodiments of the present disclosure includes performing welding of the electrode tabs first and then inserting the electrode assembly into the case. For example, an operation of assembling an electrode assembly of the secondary battery manufacturing process may be performed in the order of: electrode tab welding; electrode tab bending; electrode assembly insertion; and insulating member insertion.

FIG. 5 shows an upper inner surface and a terminal portion of the case 22. FIG. 5 is a perspective view illustrating corresponding portions providing a further understanding of the structure shown in FIGS. 3 and 4.

Referring to FIG. 5, a welding portion 33 for welding the first electrode tab 14 to the inner surface of the case 22 may be provided on an inner side of an upper surface of the case 22, and a welding portion 35 for welding the second electrode tab 15 to the inner terminal portion 27 of the second terminal 26 may be provided on the inner terminal portion 27. These welding portions 33 and 35 may be plated with a material for facilitating welding of the electrode tabs 14 and 15 or may undergo surface treatment to improve contact properties. However, the present disclosure is not limited thereto.

The description of FIGS. 2A to 4 may be equally applied to the other components.

Hereinafter, a method for manufacturing a secondary battery according to embodiments of the present disclosure will be described. Through the description of the manufacturing method below, the structure of the secondary battery described above according to the present disclosure will become clear.

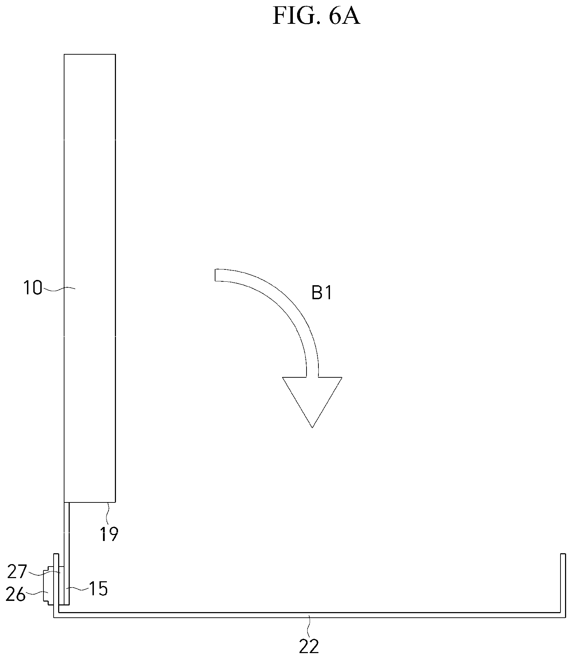

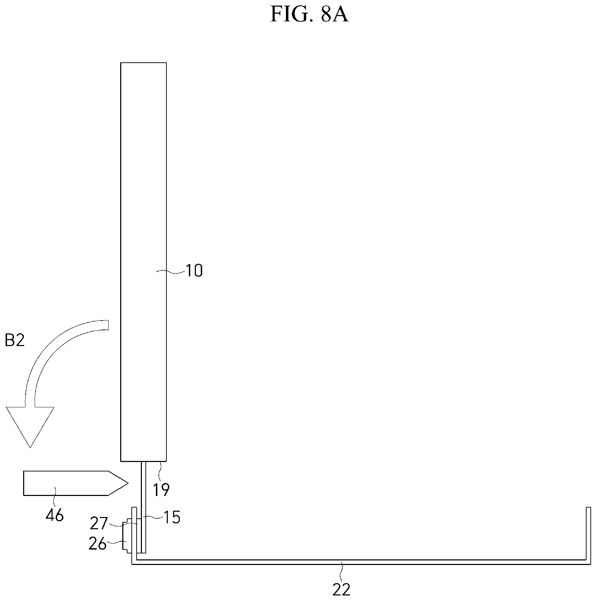

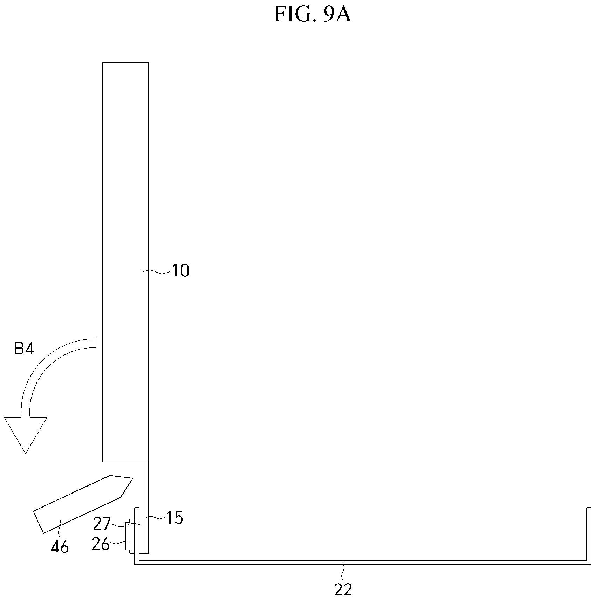

FIGS. 6A to 6C show steps of a method of assembling a case-electrode assembly according to some embodiments of the present disclosure. FIGS. 8A to 8D show steps of a method of assembling a case-electrode assembly according to some other embodiments of the present disclosure. FIGS. 9A to 9D show steps of a method of assembling a case-electrode assembly according to some other embodiments of the present disclosure.

The embodiment shown in FIGS. 6A to 6C shows an assembly method in which the electrode tab 15 of the electrode assembly 10 is positioned close to an outer side of the electrode plate edge surface 19 of the electrode assembly 10 (e.g., the outer side is a side exposed to the outside after the electrode assembly 10 is laterally inserted into the case 22). The embodiment shown in FIGS. 8A to 8D shows an assembly method in which the electrode tab of the electrode assembly 10 is positioned at an intermediate portion of the electrode assembly 10 (e.g., the intermediate portion is an intermediate position of the electrode plate edge surface 19 of the electrode assembly 10). The embodiment shown in FIGS. 9A to 9D shows an assembly method in which the electrode tab of the electrode assembly 10 is positioned close to an inner side of the electrode plate edge surface 19 of the electrode assembly 10 (e.g., the inner side is a side coming into contact with the inner surface of the case 22 after the electrode assembly 10 is laterally inserted into the case 22).

First, an embodiment in which the electrode tab 15 is positioned on the outer side of the electrode plate edge surface 19 of the electrode assembly 10 will be described with reference to FIGS. 6A to 6D. In the following description, for the convenience of understanding and drawing, a cross-sectional view of the electrode assembly 10 taken in an axial direction of the second electrode tab 15 will be used. In addition, the second terminal 26 and the second electrode tab 15 will be referred to simply as the "terminal 26" and the "electrode tab 15," respectively.

As shown in FIG. 6A, in a state in which the case 22 is placed (e.g., is placed on a surface) and the electrode assembly 10 is erected (e.g., is oriented perpendicular to the case 22), the electrode tab 15 may be welded to the inner terminal portion 27 of the terminal 26. In addition, when the electrode assembly 10 is rotated in a direction B1 toward the case 22, the electrode tab 15 may be bent.

FIG. 6B shows the electrode assembly 10 after it is rotated in the direction B1 as shown in FIG. 6A and seated in the case 22, and then, the electrode plate insulating member 32 is applied. The electrode plate insulating member 32 may cover the electrode tabs 14 and 15, the inner surface of the case 22, and the inner terminal portion 27, and electrical insulation may be provided between the electrode plate edge surface 19 of the electrode assembly 10 and adjacent members. A shape of the electrode plate insulating member 32 will be described below.

Thereafter, as shown in FIG. 6C, the cover 29 may cover and seal the opening in the case 22. In this embodiment, as described above, the shape of the electrode plate insulating member 32 may be designed so that a bending portion 36 of the electrode tab 15 does not come into contact with the inner surface of the cover 29.

FIG. 7A shows one embodiment of the electrode plate insulating member 32, FIG. 7B is a diagram showing the electrode plate insulating member 32 being applied to the case 22, and FIG. 7C shows a configuration after the electrode plate insulating member 32 is applied to case 22. The electrode plate insulating member 32 may insulate the electrode plate edge surface 19 of the electrode assembly 10 from the inner terminal portion 27 of the second terminal 26. Because the first terminal 24 is connected to the case 22 and the cover 29 is bonded to this case 22, insulation between the second terminal 26, the cover 29, and the electrode plate edge surface 19 of the electrode assembly 10 is important. Otherwise, the first terminal 24 and the second terminal 26 may be short-circuited. In addition, because the bending portion of the electrode tab has a protruding structure, the bending portion should also be electrically insulated from the inner surface of the corresponding part of the cover 29. However, an insulating portion 37 for insulation from an inner side of the first terminal 24 (e.g., the inner surface of the case 22) may be selectively included in various embodiments. The insulating portion 37 may ensure solid fitting of the electrode plate insulating member 32. In FIG. 7A, reference numeral 38 of the electrode plate insulating member 32 may be coupled to the inner terminal portion 27 of the second terminal 26 to fix the electrode plate insulating member 32 and accurately secure an insulation range. In addition, reference numeral 36 may be a hole (e.g., an opening) for smooth injection of an electrolyte, and reference numerals 39 and 40 may be parts that fit into the electrode tabs 14 and 15 of the electrode assembly 10. In addition, as described above, reference numeral 34 may provide insulation from the inner surface of the cover 29. Because the component 34 insulates the second terminal 26 and the electrode tab bending portion from the cover 29 when the second terminal 26 has the same polarity as the cover 29, the component 34 may not extend over the entire length of the electrode plate insulating member 32.

The shape of the electrode plate insulating member 32 may be designed to be applied to the inner structure of the case shown in FIGS. 3A and FIG. 5 and may depend on various shapes of secondary battery designs during the actual manufacturing.

Next, an embodiment in which the electrode tab 15 is positioned in the intermediate portion of the electrode plate edge surface 19 of the electrode assembly 10 will be described with reference to FIGS. 8A to 8D.

As shown in FIG. 8A, in a state in which the case 22 is placed and the electrode assembly 10 is erected, the electrode tab 15 may be welded to the inner terminal portion 27 of the terminal 26. In addition, a bending blade 46 may be placed against the electrode tab 15 to assist in rotating the electrode assembly 10 in the direction B2, and the electrode assembly 10 may be rotated in the direction B2 away from the case 22, that is, toward an outer side of a surface where the terminal 26 of the case 22 is positioned (e.g., a first rotation or first bending).

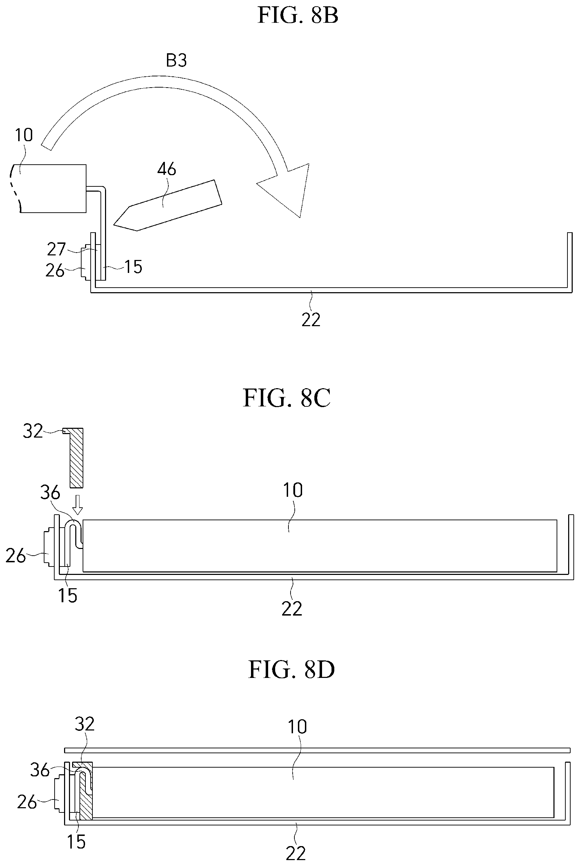

FIG. 8B shows a step of secondarily rotating the electrode assembly 10, which is first rotated and bent along the arrow in the direction B2 shown in FIG. 8A and then rotated and bent in a direction B3 toward the case 22. In this embodiment, the bending blade 46 may be used for smooth bending of the electrode tab 15.

FIG. 8C shows a state in which the electrode assembly 10 is secondarily rotated and seated in the case 22, and a state in which the electrode plate insulating member 32 is inserted into a welding portion of the electrode tab 15 of the electrode assembly 10. It can be seen that the electrode assembly 10 is inserted into the case 22, the electrode tab 15 is bent, and the electrode tab 15 and the electrode plate edge surface (19 in FIG. 9A) of the electrode assembly 10 are insulated by the electrode plate insulating member 32.

Thereafter, as shown in FIG. 8D, the cover 29 may cover and seal the opening in the case 22.

The description of the electrode plate insulating member 32 is the same as the description with reference to FIGS. 7A, 7B, and 7C.

Lastly, an embodiment in which the electrode tab 15 is positioned on the inner side of the electrode plate edge surface 19 of the electrode assembly 10 will be described with reference to FIGS. 9A to 9D.

As shown in FIG. 9A, in a state in which the case 22 is placed and the electrode assembly 10 is erected, the electrode tab 15 may be welded to the inner terminal portion 27 of the terminal 26. In addition, to rotate the electrode assembly 10 in the direction B4, a bending blade 46 may be placed against an appropriate position of the electrode tab 15, and the electrode assembly 10 may be rotated and bent in the direction B4 away from the case 22, that is, toward an outer side of a surface where the terminal 26 of the case 22 is positioned (e.g., a first rotation or first bending).

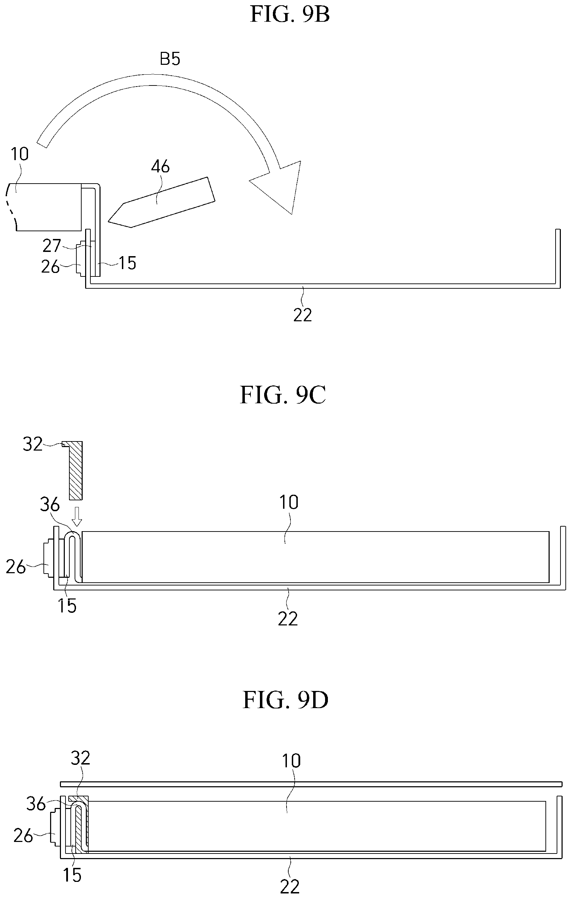

FIG. 9B shows a step of secondarily rotating the electrode assembly 10, which is first rotated and bent along the arrow in the direction B4 in FIG. 9A, in a direction B5 toward the case 22. In this step, the bending blade 46 may be used for smooth bending of the electrode tab 15.

FIG. 9C shows a state in which the electrode assembly 10 is secondarily rotated and seated in the case 22, and a state in which the electrode plate insulating member 32 is inserted into a welding portion of the electrode tab 15 of the electrode assembly 10. It can be seen that the electrode assembly 10 is inserted into the case 22, the electrode tab 15 is bent, and the electrode tab 15 and the electrode plate edge surface (19 in FIG. 9A) of the electrode assembly 10 are insulated by the electrode plate insulating member 32.

Thereafter, as shown in FIG. 9D, the cover 29 may cover and seal the opening of the case 22.

The description of the electrode plate insulating member 32 is the same as the description with reference to FIGS. 7A, 7B, and 7C.

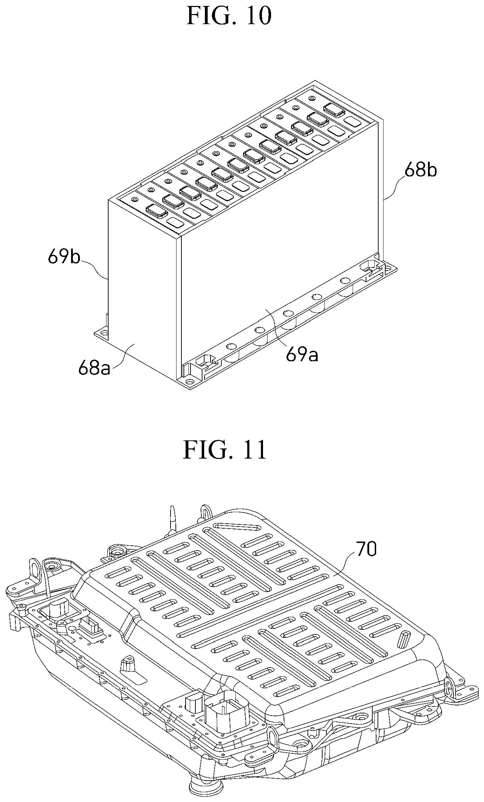

FIG. 10 is a perspective view of a secondary battery module in which secondary batteries are arranged according to embodiments of the present disclosure. With the increase in secondary battery capacity for driving electric vehicles or the like, a secondary battery module may be manufactured by arranging a plurality of secondary battery cells transversely and/or longitudinally and connecting them together. The plurality of secondary batteries may be arranged in a space defined by a pair of facing end plates 68a and 68b and a pair of facing side plates 69a and 69b. The secondary batteries may be arranged in an arrangement direction and in a number to obtain desired voltage and current specifications.

FIG. 11 is a perspective view of a battery pack 70 according to embodiments of the present disclosure. Referring to FIG. 11, the battery pack 70 may include an assembly to which individual batteries are electrically connected and a pack housing accommodating the same. In the drawings, for convenience of illustration, components including a bus bar, a cooling unit, external terminals for electrically connecting batteries, etc., are not shown.

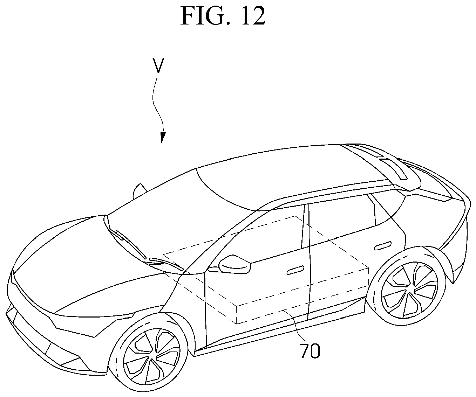

The battery pack 70 may be mounted on (or in) a vehicle. The vehicle may be, for example, an electric vehicle, a hybrid vehicle, or a plug-in hybrid vehicle. The vehicle may be a four-wheeled vehicle or a two-wheeled vehicle but is not limited thereto. FIG. 12 shows a vehicle V that includes the battery pack 70 shown in FIG. 11 on the lower body thereof. The vehicle V may operate by (e.g., may be powered by) receiving power from the battery pack 70.

According to embodiments of the present disclosure, an electrode assembly is inserted laterally into an opening in the lateral surface of (e.g., into an open lateral surface of) a case and assembled thereto such that the electrode assembly having a maximized size can be easily assembled in a limited space. Therefore, even when the tab of the electrode assembly is formed to be short and an area of the electrode assembly is increased, tab welding, tab bending, insulating member installation, and insertion of the electrode assembly into the case can be easily performed so that a battery capacity can be expanded without sacrificing production costs.

## Claims

1. A secondary battery comprising:
a case (22) having an open lateral surface;
an electrode assembly (10) inserted into the case (22) through the open lateral side, the electrode assembly (10) comprising an electrode plate having an electrode tab (14, 15);
a terminal (24, 26) electrically connected to the bent electrode tab (14, 15) of the electrode assembly (10), the terminal being exposed to the outside of the case (22);
a cover (29) sealing the open lateral side of the case (22); and
an electrode plate insulating member (32) electrically insulating the electrode plate of the electrode assembly (10) from the terminal (24, 26).

2. The secondary battery as claimed in claim 1, wherein the terminal (24, 26) comprises:
a first terminal (24) bonded to the case (22); and
a second terminal (26) having an inner terminal portion (27) that is electrically insulated from the case (22) by an insulator (30) and extends into an interior of the case (22).

3. The secondary battery as claimed in claim 2, wherein the electrode tab (14, 15) of the electrode assembly (10) comprises:
a first electrode tab (14) welded to an inner surface of the case (22) and connected to the first terminal (24) through the case (22); and
a second electrode tab (15) connected to an inner terminal portion (27) of the second terminal (26).

4. The secondary battery as claimed in claim 2, wherein the electrode plate insulating member (32) comprises a first insulating portion (37) electrically insulating the inner terminal portion (27) of the second terminal (26) from the electrode plate of the electrode assembly (10); and
a second insulating portion (37) electrically insulating the first terminal (24) from the electrode plate of the electrode assembly (10).

5. The secondary battery as claimed in any one of the preceding claims, wherein the electrode plate insulating member (32) comprises an insulating portion (37) electrically insulating an inner surface of the cover (29) and a bending portion of the electrode tab (15).

6. The secondary battery as claimed in any one of the preceding claims, wherein a bending portion (36) of the electrode tab (15) faces the cover (29).

7. The secondary battery as claimed in any one of the preceding claims, wherein the electrode tab (14, 15) is connected to the terminal (24, 26) by welding, and wherein the terminal (24, 26) comprises a welding portion (33, 35) at where the electrode tab (14, 15) is welded thereto.

8. A method of manufacturing a secondary battery, the method comprising:
manufacturing a case (22) having an open lateral surface and a cover (29) configured to seal the open lateral size;
manufacturing an electrode assembly (10) comprising an electrode tab (14, 15);
manufacturing a terminal (24, 26) to be coupled to the case (22) and coupling the terminal to the case (22);
connecting the electrode tab (14, 15) of the electrode assembly (10) to the terminal coupled to the case (22);
bending the electrode tab (14, 15) of the electrode assembly (10);
inserting the electrode assembly (10), having the bent electrode tab (14, 15), into the case (22) through the open lateral side of the case (22);
applying an electrode plate insulating member (32) to electrically insulate the electrode plate of the electrode assembly (10) and the terminal; and
sealing the open lateral side of the case (22) with the cover (29).

9. The method as claimed in claim 8, wherein the coupling of the terminal to the case (22) comprises:
bonding a first terminal (24) to the case (22); and
electrically insulating a second terminal (26) from the case (22) and connecting the second terminal (26) to the case (22).

10. The method as claimed in claim 9, wherein the connecting of the electrode tab (14, 15) of the electrode assembly (10) to the terminal coupled to the case (22) comprises:
welding a first electrode tab (14) to an inner surface of the case (22) and connecting the first electrode tab (14) to the first terminal (24) through the case (22); and
welding and connecting the second electrode tab (15) to the second terminal (26).

11. The method as claimed in claim 9, wherein the electrode plate insulating member (32) comprises a first insulating portion (37) to electrically insulate the inner terminal portion (27) of the second terminal (26) from the electrode plate of the electrode assembly (10).

12. The method as claimed in claim 8, wherein the electrode plate insulating member (32) comprises a second insulating portion (37) to electrically insulate the first terminal (24) from the electrode plate of the electrode assembly (10).

13. The method as claimed in claim 8, wherein the electrode plate insulating member (32) comprises an insulating portion (37) to electrically insulate an inner surface of the cover (29) and a bending portion of the bent electrode tab (14, 15).

14. The method as claimed in claim 8, wherein the bending of the electrode tab (14, 15) of the electrode assembly (10) comprises bending a bending portion of the electrode tab (14, 15) to face the cover (29).

15. The method as claimed in claim 8, wherein the bending of the electrode tab (14, 15) of the electrode assembly (10) comprises rotating the electrode assembly (10), having the electrode tab (14, 15) connected to the terminal, toward the case (22).
